# EUROPÄISCHE PATENTSCHRIFT

(11) **EP 1 702 804 B1**
(45) Veröffentlichungstag und Bekanntmachung des Hinweises auf die Patenterteilung: **12.09.2007**
(21) Anmeldenummer: 06004320.5
(22) Anmeldetag: 03.03.2006
(51) Int. Cl.: B60R 13/08, F01N 7/14, F02B 77/11, F16B 7/04

(54) **Verbindungsvorrichtung zum Festlegen eines Strukturbauteils, insbesondere Abschirmteils**
Connecting device for attaching a structural element, particularly a shielding component
Dispositif d'assemblage pour attacher un élément de structure, notamment un ecran de protecteur

(30) Priorität: 19.03.2005 DE 102005012748
(43) Veröffentlichungstag der Anmeldung: 20.09.2006
(73) Patentinhaber: ElringKlinger AG, 72581 Dettingen/Erms (DE)
(72) Erfinder: Heiselbetz, Gerald, 90579 Langenzenn (DE); Goldmann, Fritz, 90556 Cadolzburg (DE)
(74) Vertreter: Bartels & Partner

(56) Entgegenhaltungen:
- DE-U1- 20 101 743
- US-A- 4 085 816
- US-A- 5 036 947
- US-A- 5 649 510
- US-A- 5 722 237
- US-B1- 6 530 443

## Beschreibung

Die Erfindung bezieht sich auf eine Verbindungsvorrichtung zum Festlegen eines Strukturbauteils, insbesondere Abschirmteils, gemäß der Merkmalsausgestaltung des Oberbegriffes des Patentanspruches 1.

Während die Wärmeentwicklung beispielsweise eines sparsamen leistungsoptimierten Dieselmotors am Zylinder- oder Kurbelwellengehäuse sehr gering sein kann, gilt das für "heiße Zonen", wie bei Krümmer, Turbolader, Katalysator etc. keineswegs. Durch die immer kompaktere Konstruktion der Motoren geraten zunehmend Komponenten in enge Nachbarschaft, die thermisch nicht "kompatibel" sind. Demgemäß ist es notwendig, mit sog. Abschirmteilen, wie Hitzeschildern, thermische Motorenkomponenten gegenüber angrenzenden wärmeempfindlichen Aggregaten, wie Sensoren, Kraftstoffleitungen, Druckdosen, Karosserieteilen etc., zu schützen. Die Situation wird durch den Kompaktbau auch insofern verschärft, als die hohe Packungsdichte der Aggregate den kühlenden Luftstrom im Motorraum einengt. Auch Lärmschutzmaßnahmen können dazu mit beitragen. So können beispielsweise Kunststoffbodenplatten, die den Schallaustritt vom Motorraum zur Fahrbahn vermindern sollen, unter Umständen eine wirkungsvolle Isolation erzeugen, mit der Wärme im Motorraum eingeschlossen wird. Katalysatoren zählen wegen ihrer phasenweisen hohen Oberflächentemperatur zu den Hitzequellen, die den Einsatz von schützenden Schildbarrieren jedenfalls erforderlich machen können. Ein typisches Beispiel hierfür sind konstruktive Maßnahmen, wie die Positionierung des Katalysators dicht am Krümmer. Dieses Bauprinzip, das der schnellen Aufheizung des Katalysators und damit der Emissionsminderung in der Kaltstartphase dient, verlegt eine starke Hitzequelle in den Motorraum, wo sich zahlreiche Aggregate auf engem Raum drängen. Ebenfalls eine Ursache für die wachsende Bedeutung von Abschirmteilen, wie Hitzeschildern, ist der Trend zum Einsatz von Thermoplasten. Die hervorragend formbaren, leichten und wirtschaftlichen Werkstoffe setzen sich im Motorraum zusehends durch, erfordern aber ein besonderes Augenmerk im Hinblick auf die Umgebungstemperaturen am Einsatzort, bezogen auf sonstige thermische Motorenteile (Neue Werkstoffe und Entwicklungs-Tools für den Hitzeschutz in MTZ 12/2001, Jahrgang 62, Seite 1044ff).

Zu den thermischen Belastungen, denen Strukturbauteile wie insbesondere Abschirmteile im Betrieb ausgesetzt sind, kommen mechanische Belastungen insbesondere durch Vibrationen hinzu, die über Trägerteile auf die Strukturbauteile übertragen werden. Angesichts dieser Belastungen sind an die Verbindungsvorrichtungen, die derartige Strukturbauteile an den zugehörigen Trägerteilen in Stellung halten, besondere Anforderungen zu stellen. Die üblichen Verbindungsvorrichtungen des Standes der Technik sehen Federklammern mit einer gewissen Vorspannung (Clipse) vor, welche über Stehbolzen oder dergleichen, aber auch über ganze Baukomponenten, beispielsweise Magnetschalter von Lichtmaschinen oder über Abgaskrümmer, geklemmt werden. Die Klemmkraft oder Haltekraft resultiert hierbei aus der Wahl des Federmaterials und der konstruktiven Auslegung der betreffenden Federn. Wie sich gezeigt hat, besteht jedoch, insbesondere wenn es sich bei dem betreffenden Trägerteil um ein heißes Bauteil handelt, die Gefahr, dass Ermüdungserscheinungen im Federmaterial eintreten, was verstärkt der Fall ist, wenn betriebsbedingte Vibrationen hinzu kommen. Eine sichere Festlegung der betreffenden Strukturbauteile mittels der bekannten Verbindungsvorrichtungen ist daher nicht gewährleistet.

Durch die US 6 530 443 B1 ist eine Verbindungsvorrichtung zum Festlegen eines Abschirmteils in Form eines Hitzeschildes an zumindest einem zugeordneten Trägerteil mittels mindestens eine Klemmteils bekannt, das mit mindestens einer Klemmfläche in Anlage mit dem Trägerteil bringbar ist, wobei die Klemmfläche sich an einen Festlegearm des Klemmteils anschließt, der mittels einer Anlegeeinrichtung kraftschlüssig auf das Trägerteil zustellbar ist. Was die Montagefreundlichkeit der bekannten Lösung anbelangt, läßt diese noch Wünsche offen.

Durch das nächstkommende deutsche Gebrauchsmuster 201 01 743 U1 ist eine Verbindungsvorrichtung bekannt, die neben den bekannten, durch das vorstehend genannte US-Patent aufgezeigten Merkmalen noch das weitere gattungsgemäße Merkmal zeigt, dass das Klemmteil zwei Festlegearme aufweist, die sich in zueinander entgegengesetzter Richtung von der beiden Armen gemeinsamen Anlegeeinrichtung weg erstrecken. Wie bei der Lösung nach dem US-Patent ist auch die als Rohrverbinder ausgebildete Verbindungsvorrichtung nach der deutschen Gebrauchsmusterschrift betreffend das jeweilige Klemmteil mit den Festlegearmen mehrteilig ausgebildet, was die Möglichkeit eröffnet, dass vor oder während der Montage Teile verloren gehen, was eine reibungslose Montage beeinträchtigt.

Ausgehend von diesem Stand der Technik liegt der Erfindung die Aufgabe zugrunde, eine Verbindungsvorrichtung zur Verfügung zu stellen, die neben einer besonders sicheren Festlegung betreffender Strukturbauteile auch bei hohen thermischen und mechanischen Dauerbelastungen noch besonders montagefreundlich ausgestaltet ist.

Eine dahingehende Aufgabe löst eine Verbindungsvorrichtung mit den Merkmalen des Patentanspruches 1 in seiner Gesamtheit.

Dadurch, dass gemäß dem kennzeichnenden Teil des Patentanspruches 1 einer der Arme des Klemmteils über den Bereich der zugehörigen Klemmfläche hinaus durch einen Fortsatz verlängert ist und dass der Fortsatz an einer Anbringstelle mit dem Abschirmteil verbunden ist, ist eine besonders montagefreundliche Lösung geschaffen, bei der in vormontiertem Zustand das Klemmteil am zugeordneten Strukturbauteil bereits unverlierbar gehalten ist, bevor die Spannschraube angebracht wird, um die Montageeinheit zu vervollständigen.

Während teilweise beim Stand der Technik lediglich die Federkraft der Klammern oder Clipse als Klemmkraft am betreffenden Trägerteil zur Verfügung steht, so dass es aufgrund der vorstehend erwähnten Ermüdungserscheinungen und Vibrationsbelastungen zu Verschiebungen oder gar dem Abfallen des Strukturbauteils kommen kann, sieht die Erfindung die kraftschlüssige Zustellung eines Festlegearmes des Klemmteils mittels einer Anlegeeinrichtung vor. Die Klemmung des jeweiligen Trägerteils erfolgt mit einer zusätzlich zu Elastizitätskräften oder unabhängig von Elastizitätskräften durch die Anlegeeinrichtung bewirkten Klemmkraft, so dass eine hohe Betriebssicherheit der Festlegung des Strukturbauteils erreicht ist.

Wenn hierbei das Klemmteil als steifes Bauteil ausgebildet ist, weist der Fortsatz zwischen der Anbringstelle und dem Übergangsbereich zur Klemmfläche des benachbarten Armes ein die im wesentlichen unbehindernde Zustellbewegung des Klemmteils auf die Trägerteile ermöglichendes Federelement auf. Ferner genügt es in vielen Fällen für die Gesamtmontage des Strukturbauteils, wenn eine einzige Spannschraube festgezogen wird.

Eine besonders einfache und sichere Festlegung ergibt sich bei Ausführungsbeispielen, bei denen die Anlegeeinrichtung eine Spannschraube aufweist, mittels deren Schraubenkraft das Klemmteil gegen das betreffende Trägerteil spannbar ist.

Bei besonders vorteilhaften Ausführungsbeispielen bildet ein mit dem Strukturbauteil verbundenes Befestigungsteil in einem jeweiligen Klemmbereich mit den betreffenden Klemmflächen des Klemmteils zusammenwirkende zweite Klemmflächen, an die die jeweils betreffenden Trägerteile mittels der zugeordneten ersten Klemmflächen des Klemmteiles anpreßbar sind, wobei das Klemmteil durch die Schraubenkraft der Spannschraube in Richtung auf das Befestigungsteil hin zustellbar ist. Wenn hierbei die Anordnung so getroffen ist, dass beim Zustellen des Klemmteiles in Richtung auf das Befestigungsteil, wenn die Spannschraube angezogen wird, die für die sichere Festlegung gewünschte und erforderliche Klemmkraft auf die zwischen den Klemmflächen gespannten Trägerteile bereits ausgeübt wird, bevor das Klemmteil durch die Spannschraube bis zur Anlage am Befestigungsteil zugestellt ist, dann ist die resultierende Klemmkraft davon abhängig, wie weit das Klemmteil durch Festziehen der Spannschraube an das Befestigungsteil angenähert ist. Durch mehr oder weniger starkes Festziehen der Spannschraube, d. h. mehr oder weniger starke Annäherung des Klemmteiles an das Befestigungsteil, ist die Klemmkraft wunschgemäß einstellbar.

Diese Ausführungsform eröffnet auch die Möglichkeit, das Klemmteil als verhältnismäßig starres Bauteil auszubilden, beispielsweise in Form einer Klemmleiste mit einer Verstärkungssicke. Die Klemmkraft bestimmt sich hierbei im wesentlichen ausschließlich in Entsprechung zur Schraubenkraft der Spannschraube.

Wenn beim Montagevorgang die erforderliche Soll-Klemmkraft an den geklemmten Trägerteilen erreicht wird, bevor das Klemmteil durch die Spannschraube bis zur Anlage an das Befestigungsteil zugestellt ist, ergibt sich der weitere besondere Vorteil, dass nach Ablauf entsprechend langer Betriebszeiten, wenn gegebenenfalls Servicemaßnahmen durchzuführen sind, ein Nachziehen der Spannschraube zur stärkeren Annäherung des Klemmteiles an das Befestigungsteil vorgenommen werden kann. Falls nach längeren Betriebszeiten, beispielsweise durch Metallermüdung, ein gewisses Nachlassen der Klemmkraft eingetreten sein sollte, ließe sich durch ein solches Nachziehen die ursprüngliche, gewünschte Klemmkraft wieder herstellen.

Gegenstand der Erfindung ist auch auf ein Strukturbauteil, insbesondere Abschirmteil, mit einem flächigen Funktionsteil und einem mit diesem verbundenen Befestigungsteil, wobei erfindungsgemäß der Befestigungsteil Bestandteil einer Verbindungsvorrichtung gemäß einem der Ansprüche 1 bis 8 zum Festlegen des Strukturbauteiles an zumindest einem Trägerteil ist.

Nachstehend ist die Erfindung anhand der Zeichnungen im Einzelnen erläutert. Es zeigen:
- Fig. 1 eine perspektivische Schrägansicht, gesehen auf die Innenseite eines Strukturbauteiles in Form eines ein Abschirmteil bildenden metallischen Schalenteiles, versehen mit einer Verbindungsvorrichtung gemäß des Standes der Technik zum Festlegen des Strukturbauteiles an Trägerteilen in Form zylindrischer Hülsen;
- Fig. 2 eine perspektivische Ansicht, gesehen auf die Innenseite eines Strukturbauteiles in Form eines metallischen Abschirmteiles in Gestalt einer Teilschale, versehen mit einem Ausführungsbeispiel der erfindungsgemäßen Verbindungsvorrichtung, und
- Fig. 3 eine perspektivische Schrägansicht des in Fig. 2 Gezeigten.

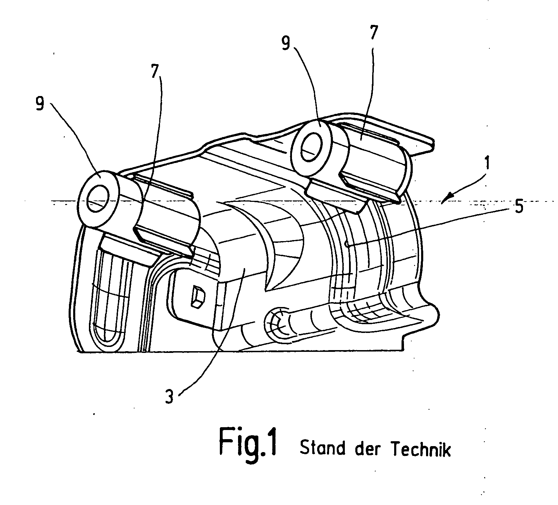

Die Fig. 1 zeigt ein Strukturbauteil in Form eines als Ganzes mit 1 bezeichneten Abschirmteils. Dieses hat die Form einer metallischen Teilschale mit einem gewölbten Funktionsteil 3, dessen Innenseite in Fig. 1 zu sehen ist und das als Wärmeschild oder schalldämmendes Element für die Abschirmung entsprechender Zonen oder Komponenten vorgesehen ist. Das gewölbte und mit die Dimensionsstabilität erhöhenden Versteifungssicken 5 versehene Funktionsteil 3 weist für seine Festlegung an zugeordneten Trägerteilen eine Verbindungsvorrichtung gemäß dem Stand der Technik auf, die in der bei bekannten, derartigen Vorrichtungen üblichen Weise Klammern aus Federstahl oder Federclipse 7 aufweist, die aufgrund ihrer Federkraft mit Klemmflächen, die sich an der Innenseite ihrer Klemmschenkel befinden, zugehörige Trägerteile klemmen, bei denen es sich beim gezeigten Beispiel um runde Hülsenkörper 9 handelt. Die die Trägerteile bildenden Hülsenkörper 9 können von nicht gezeigten Stehbolzen, beispielsweise in Verbindung mit Zylinderköpfen, Motorblöcken oder Abgaskrümmern eines Verbrennungsmotors, duchgriffen sein oder anderweitig mit einer tragenden Struktur verbunden sein. Ebenso könnten die Federclipse 7 eine unmittelbare Klemmverbindung an Stehbolzen bilden.

Wie bereits erwähnt, besteht bei den Lösungen gemäß dem in Fig. 1 gezeigten Stand der Technik die Gefahr, dass durch Ermüdungserscheinungen und/oder thermische Belastungen im Betrieb ein Nachlassen der Elastizitätskraft der Klipse 7 stattfindet, so dass die Betriebssicherheit zu wünschen übrig läßt. Ohnehin ist die größte erreichbare Klemmkraft auf die Federkraft der Clipse 7 begrenzt.

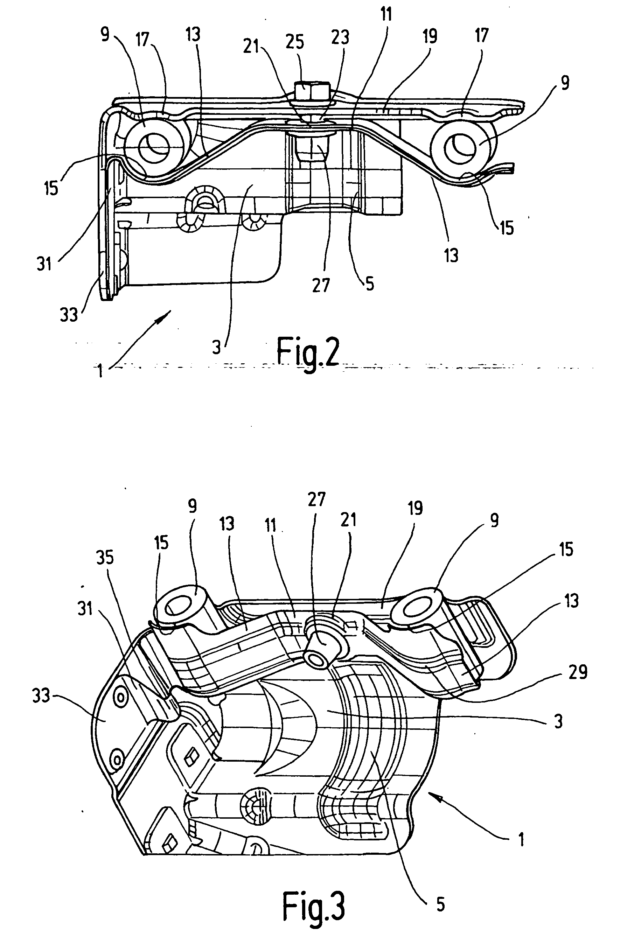

Die Fig. 2 und 3 zeigen ein Ausführungsbeispiel der erfindungsgemäßen Verbindungsvorrichtung für das Festlegen eines Strukturbauteiles, bei dem es sich ebenfalls um ein als Ganzes mit 1 bezeichnetes Abschirmteil von solcher Art handelt, wie es in Fig. 1 in Verbindung mit der üblichen Verbindungsvorrichtung gezeigt ist. Wie bei Fig. 1 bildet das Abschirmteil 1 einen flächigen, die eigentliche Abschirmwand bildenden Funktionsteil 3, in dem sich Verstärkungssicken 5 zur Erhöhung der Strukturfestigkeit und zur Optimierung des Schwingungsverhaltens befinden, was auch im Hinblick auf die Geräuschdämmung bedeutsam ist. Wie bei dem dem Stand der Technik entsprechenden Beispiel von Fig. 1 bilden kreiszylindrige Hülsenkörper 9 die Trägerteile, an denen das Abschirmteil 1 festzulegen ist und die sich im Abstand voneinander zueinander parallel erstrecken.

An Stelle der Verwendung der in Fig. 1 gezeigten Federclipse 7 ist bei der Erfindung mindestens ein Klemmteil 11 vorgesehen, das für jedes zu klemmende Trägerteil, also im vorliegenden jedes Hülsenteil 9, einen Festlegearm 13 aufweist. Jeder Festlegearm 13 ist so geformt, dass er in seinem Endbereich eine erste Klemmfläche 15 bildet, die einen Umfangsabschnitt des jeweils zu klemmenden Hülsenkörpers 9 umgibt und diesen gegen eine zweite Klemmfläche 17 preßt, die sich an einem Befestigungsteil 19 befindet. Das Befestigungsteil 19 ist mit dem Funktionsteil 3 des Abschirmteiles 1 verbunden, beim vorliegend gezeigten Beispiel in Form einer mit dem Funktionsteil 3 einstückigen Randleiste. Diese ist im wesentlichen ebenflächig, abgesehen von einer längs der Randleiste verlaufenden Verstärkungssicke sowie Einwölbungen, die die Klemmflächen 17 bilden. Die Hauptebene der das Befestigungsteil 19 bildenden Randleiste verläuft im Abstand parallel zur Verbindungslinie zwischen den Zylinderachsen der zylindrischen Hülsenkörper 9 und parallel zu diesen Zylinderachsen.

Wie aus Fig. 2 und 3 zu ersehen ist, ist beim gezeigten Ausführungsbeispiel das Klemmteil 11 zweiarmig, so dass zwei Festlegearme 13 sich von einem Zentralbereich 21 ausgehend in zueinander entgegengesetzte Richtungen zu den zu klemmenden Hülsenkörpern 9 hin erstrecken. Im Zentralbereich 21 befindet sich eine Anlegeeinrichtung zur Erzeugung einer Zustellbewegung der Festlegearme 13 gegen die Hülsenkörper 9 hin, um an diesen die Klemmkraft entstehen zu lassen. Beim gezeigten Beispiel ist die Anlegeeinrichtung durch eine Spannschraubenanordnung gebildet, die eine das Befestigungsteil 19 durchgreifende Spannschraube 23 mit einem an der Außenseite des Befestigungsteiles 19 zugänglichen Schraubenkopf 25 und eine Nietmutter 27 beinhaltet, die im Zentralbereich 21 des Klemmteiles 11 an einer Öffnung desselben eingenietet ist.

Wie aus Fig. 2 deutlich zu ersehen ist, befindet sich, wenn die Spannschraube 23 so stark festgezogen ist, dass an den Klemmflächen 15 und 17 die Klemmkraft gewünschter und erforderlicher Stärke auf die Hülsenkörper 9 einwirkt, ein Abstand zwischen Klemmteil 11 und Innenseite des Befestigungsteiles 19. Dies bedeutet, dass bei einem stärkeren Festziehen der Spannschraube 23, so dass der Abstand zwischen Zentralbereich 21 des Klemmteiles 11 und Befestigungsteil 19 verringert wird, eine Erhöhung der durch die Arme 13 über die Klemmfläche 15 erzeugten Klemmkraft erreicht wird. Wenn das Klemmteil 11 mit den Festlegearmen 13 als verhältnismäßig steifes Bauteil ausgebildet ist, beispielsweise mit einer längs verlaufenden Verstärkungssicke 29 (Fig. 3), dann steht die Stärke der Klemmkraft praktisch in unmittelbarer Beziehung dazu, wie stark die Spannschraube 23 festgezogen wird, d. h. wie weit das Klemmteil 11 an das Befestigungsteil 19 angenähert wird.

Wenn, wie bei dem vorliegenden Beispiel gezeigt, das Klemmteil 11 am Ende seines einen Festlegearmes 13 durch einen Fortsatz 31 verlängert ist und dieser endseits an einer Anbringstelle 33 mit einem Randteil des Abschirmteiles 1 verbunden ist, ergibt sich der Vorteil, dass, wenn die Verbindungsvorrichtung am Abschirmteil 1 vormontiert ist, bevor die Spannschraube 23 eingesetzt ist, das Klemmteil 11 bereits unverlierbar gesichert ist. Da, bevor die Spannschraube 23 mit der Nietmutter 27 des Klemmteiles 11 in Eingriff gebracht ist, das Klemmteil 11 vom Befestigungsteil 19 relativ weit abgehoben werden kann, erleichtert sich bei der Montage auch das Einführen der Hülsenkörper 9 zwischen die Klemmflächen 15 und 17.

Um bei einer verhältnismäßig starren Bauweise des Klemmteiles 11 die durch die Spannschraube 23 erzeugte Zustellbewegung trotz der Anbringung des Fortsatzes 31 an der Anbringstelle 33 nicht zu behindern, ist es vorteilhaft, am Fortsatz 31 zwischen der Anbringstelle 33 und dem Übergang zum Ende des Festlegearmes 13 eine Federanordnung 35 vorzusehen. Beim gezeigten Ausführungsbeispiel handelt es sich um eine in der Breite verringerte Stelle am Fortsatz 31, die eine nach innen hoch gestellte Wellenform bildet. Diese Welle wirkt sowohl als Federelement zur Gewährleistung der verhältnismäßig freien Beweglichkeit des zugewandten Festlegearmes 13 des Klemmteiles 11, als auch als Kompensierelement für gegebenenfalls auftretende, thermisch verursachte Verformungen, wie Dehnungen und Streckungen. Es liegt noch im Bereich der Erfindung die durch die Federanordnung 35 aufgebrachte Klemmkraft gleichmäßig auf die beiden Hülsenkörper 9 zu verteilen.

## Patentansprüche

1. Verbindungsvorrichtung zum Festlegen eines Strukturbauteils, insbesondere Abschirmteils (1), an zumindest einem zugeordneten Trägerteil (9) mittels mindestens eines Klemmteils (11), das mit mindestens einer Klemmfläche (15) in Anlage mit dem Trägerteil (9) bringbar ist, wobei die Klemmfläche (15) sich an einen Festlegearm (13) des Klemmteils (11) anschließt, der mittels einer Anlegeeinrichtung (23, 27) kraftschlüssig auf das Trägerteil (9) zustellbar ist und wobei das Klemmteil (11) zwei Festlegearme (13) aufweist, die sich in zueinander entgegengesetzter Richtung von der beiden Armen (13) gemeinsamen Anlegeeinrichtung (23, 27) weg erstrecken, **dadurch gekennzeichnet, dass** einer der Arme (13) des Klemmteils (11) über den Bereich der zugehörigen Klemmfläche (15) hinaus durch einen Fortsatz (31) verlängert ist und dass der Fortsatz (31) an einer Anbringstelle (33) mit dem Abschirmteil (1) verbunden ist.

2. Verbindungsvorrichtung nach Anspruch 1, **dadurch gekennzeichnet, dass** die Anlegeeinrichtung (23, 27) eine Spannschraube (23) aufweist, mittels deren Schraubenkraft das Klemmteil (11) gegen das betreffende Trägerteil (9) spannbar ist.

3. Verbindungsvorrichtung nach Anspruch 1 oder 2, **dadurch gekennzeichnet, dass** ein mit dem Strukturbauteil verbundenes Befestigungsteil (19) in einem jeweiligen Klemmbereich mit den betreffenden Klemmflächen (15) des Klemmteils (11) zusammenwirkende zweite Klemmflächen (17) bildet, an die die jeweils betreffenden Trägerteile (9) mittels der zugeordneten ersten Klemmflächen (15) des Klemmteiles (11) anpreßbar sind, das durch die Schraubenkraft der Spannschraube (23) in Richtung auf das Befestigungsteil (19) hin zustellbar ist.

4. Verbindungsvorrichtung nach einem der Ansprüche 1 bis 3, **dadurch gekennzeichnet, dass** das Klemmteil (11) als steifes Bauteil ausgebildet ist und dass der Fortsatz (31) zwischen der Anbringstelle (33) und dem Übergangsbereich zur Klemmfläche (15) des benachbarten Armes (33) ein die Zustellbewegung des Klemmteils (11) auf die Trägerteile (9) ermöglichendes Federelement (35) aufweist.

5. Verbindungsvorrichtung nach Anspruch 4, **dadurch gekennzeichnet, dass** der Fortsatz (31) gegenüber den Armen (13) des Klemmteils (11) abgewinkelt und an einem entsprechend abgewinkelten Teil des Befestigungsteils (19) anliegend mit diesem verbunden ist.

6. Verbindungsvorrichtung nach einem der Ansprüche 1 bis 5, **dadurch gekennzeichnet, dass** die jeweiligen Trägerteile durch Rundkörper, wie Stehbolzen oder Hülsen (9), gebildet sind und dass der Klemmteil (11) zwischen den Festlegearmen (13) einen geraden Zentralteil (21), an dem die Spannschraube (23) angreift, sowie davon ausgehende geschwungene Arme (13) aufweist, die die der runden Form der Trägerteile angepaßten Klemmflächen (15) bilden.

7. Strukturbauteil, insbesondere Abschirmteil (1), mit einem flächigen Funktionsteil (3) und einem mit diesem verbundenen Befestigungsteil (19), **dadurch gekennzeichnet, dass** der Befestigungsteil (19) Bestandteil einer Verbindungsvorrichtung gemäß einem der Ansprüche 1 bis 6 zum Festlegen des Strukturbauteils an zumindest einem Trägerteil (9) ist.

8. Strukturbauteil nach Anspruch 7, **dadurch gekennzeichnet, dass** der Befestigungsteil (19) einstückig mit dem Funktionsteil (3) ausgebildet ist.

9. Strukturbauteil nach Anspruch 8, **dadurch gekennzeichnet, dass** der Funktionsteil (3) die Form eines gewölbten Schalenteils hat, das an zumindest einem Rand durch eine über einen Großteil ihrer Länge gerade, ebene und gegenüber der Schalenform abgewinkelte Randleiste begrenzt ist, die das Befestigungsteil (19) bildet.

## Claims

1. Connection means for affixing a structure component, in particular a shielding part (1), to at least one associated support part (9) by means of at least one clamping part (11), which can be brought into abutment against the support part (9) with at least one clamping surface (15), whereby the clamping surface (15) follows a sitting arm (13) of the clamping part (11), which can be moved in the direction of the support part (9) by means of an abutment means (23, 27) and force closure, and whereby the clamping part (11) comprises two fitting arms (13), which extend in opposing directions to each other from abutment means (23, 27) that is common to both arms (13), **characterised in that** one of the arms (13) of the clamping part (11) is extended across the area of the associated clamping surface (15) by means of an extension (31), and **in that** the extension (31) is connected with the shielding part (1) via a fitting point (33).

2. Connection means according to Claim 1, **characterised in that** the abutment means (23, 27) comprises a tensioning screw (23), with the screw force of which the clamping part (11) can be tensioned against the relevant support part (9).

3. Connection means according to Claim 1 or 2, **characterised in that** a fitting part (19) connected with the structure component forms second clamping surfaces (17) co-operating with the relevant clamping surfaces (15) of the clamping part (11) in a relevant clamping area, against which the relevant support parts (9) can be pressed by means of the associated first clamping surfaces (15) of the clamping part (11), which can be moved in the direction of the fitting part (19) by means of the screw force of the tensioning screw (23).

4. Connection means according to one of the Claims 1 to 3, **characterised in that** the clamping part (11) takes the form of a rigid component, and **in that** the extension (31) between the fitting point (33) and the transition area towards the clamping surface (15) of the adjacent arm (33) comprises a spring element (35) facilitating the fitting movement of the clamping part (11) in the direction of the support parts (9).

5. Connection means according to Claim 4, **characterised in that** the extension (31) is angled in comparison with the arms (13) of the clamping part (11), abuts against a correspondingly angled part of the fitting part (19), and is connected with the same.

6. Connection means according to one of the Claims 1 to 5, **characterised in that** the relevant support parts are formed by circular bodies such as upright bolts or sleeves (9), and **in that** the clamping part (11) comprises a straight central part (21) engaged by the tensioning screw (23) between the fitting arms (13), as well as arced arms (13) extending from the same, which form clamping surfaces (15) matched to suit the circular shape of the support parts.

7. Structure component, in particular shielding part (1), with a spatial function part (3) and a fitting part (19) connected with the same, **characterised in that** the fitting part (19) is a part of a connection means according to one of the Claims 1 to 6 for affixing the structure component to at least one support part (9).

8. Structure component according to Claim 7, **characterised in that** the fitting part (19) consists of a single piece together with the function part (3).

9. Structure component according to Claim 8, **characterised in that** the function part (3) takes the form of an arced shell part extending at least along one edge by an edge rail that is straight along most of its length and angled in relation to the shell part, and which forms the fitting part (19).

## Revendications

1. Dispositif d'assemblage pour fixer un élément de structure, en particulier une partie d'écran (1), à au moins une partie de support (9) affectée, au moyen d'au moins une partie de serrage (11), qui peut être mise en application avec la partie de support (9) par au moins une surface de serrage (15), la surface de serrage (15) se raccordant à un bras de fixation (13) de la partie de serrage (11) qui peut être mise sur la partie de support (9) par friction au moyen d'un équipement d'application (23, 27), et la partie de serrage (11) présentant deux bras de fixation (13) qui s'éloignent, dans une direction réciproquement opposée, de l'équipement d'application (23, 27) commun aux deux bras (13), **caractérisé en ce qu'**un des bras (13) de la partie de serrage (11) est prolongé par un prolongement (31) au-delà de la zone de la surface de serrage (15) correspondante, et **en ce que** le prolongement (31) est raccordé à la partie de blindage (1) au niveau d'un emplacement de pose (33).

2. Dispositif d'assemblage selon la revendication 1, **caractérisé en ce que** l'équipement d'application (23, 27) présente une vis de serrage (23) au moyen de la force de vis de laquelle la partie de serrage (11) peut être serrée contre la partie de support (9) concernée.

3. Dispositif d'assemblage selon la revendication 1 ou 2, **caractérisé en ce qu'**une partie de fixation (19) raccordée à l'élément de structure forme, dans une zone de serrage respective, des deuxièmes surfaces de serrage (17), coopérant avec les surfaces de serrage (15) correspondantes de la partie de serrage (11), et contre lesquelles les parties de support (9) respectivement correspondantes peuvent être pressées au moyen des premières surfaces de serrage (15) affectées de la partie de serrage (11) qui peut être mise par la force de vis de la vis de serrage sur la partie de fixation (19).

4. Dispositif d'assemblage selon une des revendications 1 à 3, **caractérisé en ce que** la partie de serrage (11) est constituée en tant qu'élément rigide, et **en ce que** le prolongement (31), entre l'emplacement de pose (33) et la zone de transition vers la surface de serrage (15) du bras (33) voisin, présente un élément de ressort (35) permettant le mouvement de mise de la partie de serrage (11) sur les parties de support (9).

5. Dispositif d'assemblage selon la revendication 4, **caractérisé en ce que** le prolongement (31) est coudé par rapport aux bras (13) de la partie de serrage (11), et est raccordé au niveau d'une partie coudée en conséquence de la partie de fixation (19) en s'y appliquant.

6. Dispositif d'assemblage selon l'une des revendications 1 à 5, **caractérisé en ce que** les parties de support respectives sont formées par des corps ronds, comme des goujons ou des douilles (9), et **en ce que** la partie de serrage (11), entre les bras d'attache (13), présente une partie centrale (21) rectiligne sur laquelle agit la vis de serrage (23), ainsi que des bras (13) incurvés qui en sortent et qui forment les surfaces de serrage (15) adaptées à la forme ronde des parties de support.

7. Elément de structure, en particulier partie de blindage (1), avec une partie fonctionnelle (3) en nappe et une partie de fixation (19) raccordée à celle-ci, **caractérisé en que** la partie de fixation (19) fait partie d'un dispositif d'assemblage selon l'une des revendications 1 à 6 pour fixer l'élément de structure à au moins une partie de support (9).

8. Elément de structure selon la revendication 7, **caractérisé en ce que** la partie de fixation (19) est constituée d'un seul tenant avec la partie fonctionnelle (3).

9. Elément de structure selon la revendication 8, **caractérisé en ce que** la partie fonctionnelle (3) a la forme d'une partie de coque bombée qui est délimitée, au moins sur un bord, par un rebord rectiligne sur une grande partie de sa longueur, plan et coudé par rapport à la forme de coque, et qui forme la partie de fixation (19).
